# EUROPÄISCHE PATENTSCHRIFT

(11) **EP 0 722 807 B1**
(45) Veröffentlichungstag und Bekanntmachung des Hinweises auf die Patenterteilung: **01.03.2000**
(21) Anmeldenummer: 95118588.3
(22) Anmeldetag: 25.11.1995
(51) Int. Cl.: B23K 33/00

(54) **Tür oder Klappe von einem Kraftfahrzeug**
Door or tailboard of a vehicle
Porte ou trappe de chargement d'un véhicule

(30) Priorität: 20.01.1995 DE 19501611
(43) Veröffentlichungstag der Anmeldung: 24.07.1996
(73) Patentinhaber: Bayerische Motoren Werke Aktiengesellschaft, 80788 München (DE)
(72) Erfinder: Weiser, Klaus, D-82284 Grafrath (DE); Schwimmbeck, Johann, D-94522 Wallersdorf (DE); Aeltermann, Hubert, D-82402 Seeshaupt (DE); Aigner, Günther, D-99819 Lerchenberg (DE)

(56) Entgegenhaltungen:
- EP-A- 0 049 845
- EP-A- 0 177 945
- EP-A- 0 200 098
- EP-A- 0 200 997
- PATENT ABSTRACTS OF JAPAN vol. 005, no. 029 (M-056), 21.Februar 1981 & JP-A-55 156678 (MAZDA MOTOR CORP), 5.Dezember 1980,

## Beschreibung

Die Erfindung bezieht sich auf eine Tür oder Klappe von einem Kraftfahrzeug der im Oberbegriff des ersten Anspruchs angegebenen Art.

Aus der EP-B 0 200 997 ist eine gattungsgemäße Schweißverbindung für ein Bauteil bekannt. Hier wie dort sind als Bauteil Türen und Klappen für Kraftfahrzeuge gemeint, bei denen es wesentlich ist, daß das die Außenfläche bildende Blech vollkommen fehlerfrei ist und insbesondere keine Verwerfungen oder keinen Verzug aufweist. Unter Bleche werden im folgenden ein- oder zweiseitig verzinkte Dünnbleche verstanden, wie sie in der Kraftfahrzeugindustrie gewöhnlich für derartige Zwecke verwendet werden.

Die bekannte Schweißverbindung ist zwar bezüglich der Optik der hergestellten Teile hervorragend geeignet, nachteilig ist es jedoch, daß aufgrund der Falze Spalte vorhanden sind, die speziell gegen Korrosion behandelt werden müssen, was den gesamten Herstellungsprozeß verteuert.

Aufgabe der vorliegenden Erfindung ist es, die eingangs genannten Bauteile, also Türen und/oder Klappen von Kraftfahrzeugen, in ihrer Herstellung dahingehend zu verbessern, daß die obengenannten Nachteile nicht eintreten.

Diese Aufgabe wird erfindungsgemäß durch die kennzeichnenden Merkmale des 1. Anspruchs gelöst. Dadurch, daß nunmehr eine Stumpfnaht verwendet wird und die Falzung unterbleibt, werden keine Spalten mehr gebildet, von denen Korrosion ausgehen kann. Dementsprechend sind auch keine besonderen Korrosionsschutzmaßnahmen für Spalte notwendig. Damit ergeben sich geringere Herstellungskosten und auch geringere Investitionen sowie auch weniger Probleme beim Recyclen, da der Korrosionsschutz für die Spalte - in der Regel ein Kleber - nicht mehr vorhanden ist. Ein weiterer Vorteil der Erfindung liegt darin, daß die so hergestellten Bauteile ein geringeres Gewicht aufweisen, da der "Blechverlust" durch Falzen nicht mehr gegeben ist.

Die Ansprüche 2 bis 4 beschreiben vorteilhafte Weiterbildungen. Der Vorteil der Weiterbildung nach Anspruch 2 besteht darin, daß die Stoßkante des zweiten Bleches nicht besonders vorbehandelt werden muß, um parallel zur Stoßkante des ersten Blechs zu liegen, da nunmehr beide Bleche im Bereich der Schweißnaht in einer gemeinsamen Ebene liegen.

Durch die Weiterbildung nach Anspruch 3 wird der Vorteil erzielt, daß die Knickkante am Außenblech formstabil verläuft und damit enge Spalten zwischen zwei benachbarten Bauteilen gebildet werden können.

Im folgenden wird die Erfindung anhand eines bevorzugten Ausführungsbeispiels näher erläutert.

Es stellen dar:
- Figur 1: ein schematisiertes Ausführungsbeispiel der Erfindung;
- Figur 2: eine Weiterbildung der Ausgestaltung nach Figur 1.

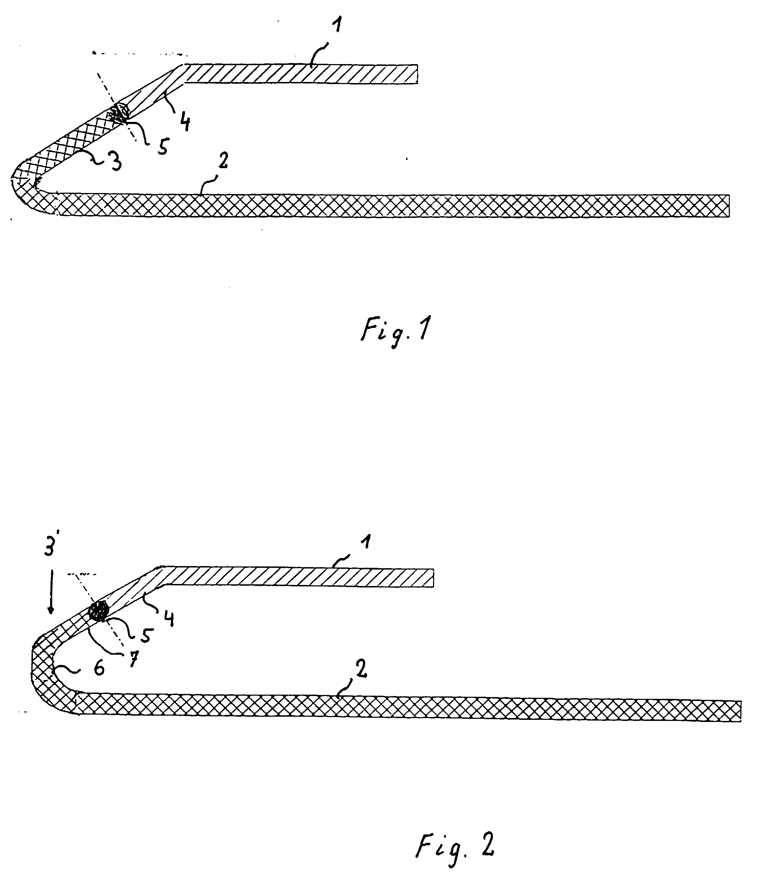

In den beiden Beispielen wird ein Innenblech 1 mit einem Außenblech 2 zu einer Kraftfahrzeugtür verbunden. Hierzu wird das Außenblech in seinem Randbereich 3 nach dem Ausführungsbeispiel in Figur 1 um ca. 135° in Richtung seiner Rückseite gebördelt. Ebenso ist der Randbereich 4 des Innenbleches um ca. 45° in Richtung seiner Innenfläche hin gebogen, wobei die Randbereiche 3 und 4 im Bereich ihrer Stoßkante 5 in einer gemeinsamen Ebene liegen. Dies hat den Vorteil, daß die Stoßkanten nicht gesondert behandelt werden müssen, beispielsweise unter einem bestimmten Winkel angeschrägt werden müssen.

Sodann werden die beiden Bleche an ihren Stoßkanten 5 mit Hilfe verzugsarmer Schweißverfahren, insbesondere MIG-, WIC-Schweißverfahren oder mit Hilfe des Laserschweißverfahrens miteinander verbunden.

Aufgrund dieser Ausgestaltung entstehen keine Spalten, von denen Korrosion ausgehen kann und die deshalb extra behandelt werden müssen. Zudem liegen beide Bleche im Bereich der Schweißnaht in einer gemeinsamen Ebene, so daß auch hier kein Spalt entsteht. Daneben kann - nach einer entsprechenden Nachbehandlung der Nahtstelle - eine zum Lackieren vollkommen ebene Fläche ohne Kanten erzielt werden, die einen gleichmäßigen Lackauftrag gestatten. Damit fällt die aufgrund der Oberflächenspannung des Lackes an Kanten verringerte Schichtstärke weg.

Die Ausgestaltung nach Figur 2 unterscheidet sich von dem Beispiel nach Figur 1 dadurch, daß der gebördelte Bereich 3' des Außenbleches 2 in zwei Stufen gebördelt ist. Bei der ersten Stufe wird der Bereich 6 um 90° gebördelt und dann wird das sich daran anschließende freie Ende als weiterer Bereich 7 nochmals um 45° gebördelt. Das Blech 1 ist gleich wie in Figur 1 geformt.

Die Lösung nach Figur 2 hat den Vorteil, daß der Bereich 6 in Verbindung mit einem benachbarten Bauteil einen vollkommen gleichmäßig verlaufenden Spalt bildet, der zudem gering gehalten werden kann, so daß die Optik des mit einer derartigen Türe oder Haube hergestellten Kraftfahrzeuges weiter erhöht wird.

Die Schweißverbindung in dem Beispiel nach Figur 2 ist in gleicher Weise hergestellt wie die in Figur 1.

## Patentansprüche

1. Tür oder Klappe von einem Kraftfahrzeug dessen Grundkörper im wesentlichen aus zwei miteinander verschweißten Dünnblechen (1, 2) besteht, von denen das erste Blech (1) eine optisch glatte Außenfläche bildet, deren Rand (3, 3') um mindestens 90° auf seiner Rückseite gebördelt ist und das mit dem zweiten Blech (2), welches die Innenfläche bildet, mit einem verzugsarmen Schweißverfahren verschweißt ist,
dadurch gekennzeichnet, daß die beiden Bleche (1, 2) mittels einer Stumpfnaht miteinander verschweißt sind.

2. Tür oder Klappe von einem Kraftfahrzeug nach Anspruch 1,
dadurch gekennzeichnet, daß der Rand (4) des zweiten Blechs (2) derart geformt ist, daß er im Bereich der Schweißnaht in einer Ebene zum Rand (3, 3') des ersten Bleches (1) liegt.

3. Tür oder Klappe von einem Kraftfahrzeug nach Anspruch 1 oder 2,
dadurch gekennzeichnet, daß der Rand (3) des ersten Blechs (1) in einem ersten Bereich (6) um 90° gebördelt ist und in einem zweiten, sich daran anschließenden Bereich (7) weiter in Richtung auf seine Rückseite gebördelt ist.

4. Tür oder Klappe von einem Kraftfahrzeug nach einem der vorangegangenen Ansprüche,
dadurch gekennzeichnet, daß die beiden Bleche (1, 2) mindestens einseitig verzinkt sind.

## Claims

1. A door or tailboard of a motor vehicle wherein the base member comprises substantially two welded-together thin metal sheets (1, 2), the first sheet (1) whereof has an optically smooth outer surface, the edge (3, 3') of which is bent by at least 90° on to its back, and which is welded to the second sheet (2) which forms the inner surface (2),
characterised in that the two sheets (1, 2) are butt-welded together.

2. A door or tailboard of a motor vehicle according to claim 1,
characterised in that the edge (4) of the second sheet (2) is shaped so that in the weld region it lies in the same plane as the edge (3, 3') of the first sheet (1).

3. A door or tailboard of a motor vehicle according to claim 1 or claim 2,
characterised in that the edge (3) of the first sheet (1) is bent through 90° in a first region (6) and is additionally bent towards the back in a second adjoining region (7).

4. A door or tailboard of a motor vehicle according to any of the preceding claims,
characterised in that the two sheets (1, 2) are galvanised on at least one side.

## Revendications

1. Porte ou trappe d'un véhicule à moteur dont le corps de base consiste essentiellement en deux tôles minces (1, 2), qui sont soudées l'une avec l'autre, la première tôle (1) formant une surface extérieure optiquement lisse, dont le bord (3, 3') est replié d'au moins 90° sur sa face arrière et qui est soudé par un procédé de soudage, qui provoque un faible étirement avec la deuxième tôle (2), qui constitue la surface intérieure,
caractérisé en ce que
les deux tôles (1, 2) sont soudées l'une avec l'autre au moyen d'un cordon de soudure sans aspérités.

2. Porte ou trappe d'un véhicule à moteur, selon la revendication 1,
caractérisé en ce que
le bord (4) de la deuxième tôle (2) est formé de telle manière qu'il se trouve dans la zone du cordon de soudure dans un plan passant par le bord (3, 3') de la première tôle (1).

3. Porte ou trappe d'un véhicule à moteur, selon la revendication 1 ou 2,
caractérisé en ce que
le bord (3) de la première tôle (1) est replié dans une première zone (6) à 90° et dans une deuxième zone (7) qui s'y raccorde il est replié davantage en direction de sa face arrière.

4. Porte ou trappe d'un véhicule à moteur, selon l'une des revendications précédentes
caractérisé en ce que
les deux tôles (1, 2) sont galvanisées au moins d'un côté.
